# EUROPEAN PATENT APPLICATION

(11) **EP 4 546 455 A1**
(43) Date of publication of application: **30.04.2025**
(21) Application number: 22954624.7
(22) Date of filing: 12.08.2022
(51) Int. Cl.: H01M 4/36, H01M 10/0525

(54) **SILICON-CARBON COMPOSITE MATERIAL AND PREPARATION METHOD THEREFOR, AND SECONDARY BATTERY COMPRISING SILICON-CARBON COMPOSITE MATERIAL**

(71) Applicant: CONTEMPORARY AMPEREX TECHNOLOGY (HONG KONG) LIMITED, Hong Kong (HK)
(72) Inventor: WU, Kai, Ningde, Fujian 352100 (CN); LI, Yuan, Ningde, Fujian 352100 (CN); DONG, Xiaobin, Ningde, Fujian 352100 (CN); LV, Zijian, Ningde, Fujian 352100 (CN); LIU, Liangbin, Ningde, Fujian 352100 (CN); QIN, Yuwei, Ningde, Fujian 352100 (CN); WANG, Jiazheng, Ningde, Fujian 352100 (CN)
(74) Representative: Gong, Jinping
(86) International application number: PCT/CN2022/112206
(87) International publication number: WO 2024/031667

(57) **Abstract**

The present application provides a silicon-carbon composite, a method of preparing the same, and a secondary battery including the silicon-carbon composite. The silicon-carbon composite includes porous carbon-based matrix particles having a three-dimensional network interconnecting pore structure; and silicon-based nanoparticles, at least a portion of which is provided in the three-dimensional network interconnecting pore structure. The present application enables secondary batteries to have an improved cycle performance and energy density.

## Description

### TECHNICAL FIELD

The present application belongs to the technical field of battery, in particular to a silicon-carbon composite, a method of preparing the same, and a secondary battery comprising the silicon-carbon composite.

### BACKGROUND

Secondary batteries have properties such as high capacity and long life, and thus are widely used in electronic devices such as cellular phones, laptop computers, battery operated vehicles, electric cars, electric airplanes, electric boats, electric toy cars, electric toy boats, electric toy airplanes, and power tools, among others. Due to great progress made in secondary batteries, performances of secondary batteries are required to be higher. In order to improve energy density of secondary batteries, silicon-based negative electrode active materials are currently considered in the industry, but the silicon-based materials would produce large own expansion although they have a higher specific capacity, which seriously affects cycle performance of batteries.

Therefore, how to make batteries have a higher energy density while taking into account a better cycle performance is still an urgent problem to be solved in this field.

### SUMMARY

The present application is made in view of the foregoing technical problem. An object of the present application is to provide a silicon-carbon composite, a method for preparing the same, and a secondary battery comprising the silicon-carbon composite, such that the secondary battery can have a better cycle performance and a higher energy density both.

A first aspect of the present application provides a silicon-carbon composite, the silicon-carbon composite comprising carbon-based matrix particles, the carbon-based matrix particles comprising a three-dimensional network interconnecting pore structure; and silicon-based nanoparticles, at least a portion of which is provided in the three-dimensional network interconnecting pore structure.

The carbon-based matrix particles of the present application have a stable porous skeleton structure, which has a stronger support capacity, exhibits a higher resistance to stress, and has excellent mechanical properties and electrical conductivity. The carbon-based matrix particles comprise a three-dimensional network interconnecting pore structure, which allows more space for the silicon-based nanoparticles to be set up, and can be used for storage of a large amount of silicon. Upon compounding the porous carbon-based matrix particles with the silicon-based nanoparticles, the silicon-based nanoparticles are not easy to agglomerate, and can be uniformly dispersed in pores of the carbon-based matrix particles. After the carbon-based matrix particles are compounded with the silicon-based nanoparticles, the resulting silicon-carbon composite can have an improved electrical conductivity while the carbon matrix particle may alleviate volume change of silicon in the process of intercalation-deintercalation of lithium and fully withstand stress changes of the silicon-based nanoparticles, ensuring structural stability of the silicon-carbon composites, and improving cycle stability and lithium storage of the silicon-carbon composites. Thus, secondary batteries adopting the silicon carbon composite has improved cycle performance and energy density.

In any embodiment, at least a portion of pores in a surface region of the carbon-based matrix particles have a pore size larger than pores in an internal region of the carbon-based matrix particles.

In any embodiment, the three-dimensional network interconnecting pore structure exhibits a laminar distribution in the carbon-based matrix particles.

In any embodiment, the silicon-carbon composite has a powder compaction density denoted as P₁₁ after subjected to powder pressing once under a force of 20,000N, the silicon-carbon composite has a powder compaction density enoted as P₂₁ after subjected to powder pressing 20 times under a force of 20,000N, and the silicon-carbon composite satisfies: 1.00 < P₂₁/P₁₁ ≤ 1.20; optionally, 1.02 ≤ P₂₁/P₁₁ ≤ 1.10.

The silicon-carbon composite of the present application has a specific structure, and the powder compaction density under the above test conditions meets a specific requirement, so that the silicon-carbon composite has a higher specific capacity while further having a better compression resistance, which effectively ensures structural stability of the negative electrode film layer, so as to enable the secondary battery containing the material to have a higher energy density and a better cycle performance.

In any embodiment, the silicon-carbon composite has a powder compaction density denoted as P₁₁ in g/cm³ under a force of 20,000N, then the silicon-carbon composite satisfies: 1.10≤P₁₁≤1.40; optionally, 1.12≤P₁₁≤1.35.

In any embodiment, the carbon-based matrix particles have a total volume of pores with a diameter greater than 100 nm, noted as V₁ cm³/g, the carbon-based matrix particles have a total volume of pores with a diameter less than or equal to 100 nm, noted as V2 cm³/g, and the carbon-based matrix particles satisfy: 1 < V_{2/}V₁ ≤ 30; optionally, 3 ≤ V₂/ V₁ ≤ 25, as measured using a gas adsorption-desorption method.

In the present application, by regulating the ratio of the total volume of pores having a specific size in the porous carbon-based matrix particles, it is allowed to ensure that the carbon-based matrix particles have a moderate pore size distribution, which is conducive to subsequent incorporation of a silicon-containing precursor into pores of the carbon-based matrix particles, and reduces the risk of silicon being deposited on surface of the carbon-based matrix particles; and which is also conducive to deposition on the carbon-based matrix particles towards saturation so as to enable the resulting silicon carbon composite particles formed after the deposition of silicon to have an appropriate specific surface area, and ensure its reversible capacity.

In any embodiment, the carbon-based matrix particles have a total volume of pores with a diameter greater than 100 nm, noted as V₁ cm³/g, as measured using a gas adsorption-desorption method and V₁ ≥ 0.01, and optionally, 0.01 ≤ V₁ ≤ 0.5.

In any embodiment, the carbon-based matrix particles have a total volume of pores with a diameter less than or equal to 100 nm, noted as V₂ cm³/g, as measured using a gas adsorption-desorption method and V₂ ≥ 0.05, and optionally, 0.05 ≤ V₁ ≤ 1.1.

In any embodiment, the carbon-based matrix particles have a porosity, noted as W, of 40% ≤ W ≤ 80%; optionally, 50% ≤ W ≤ 70%.

When the carbon-based matrix particles in the present application has a porosity satisfying the above range, its pores occupy an appropriate volume in its skeleton structure, which can ensure stability of the skeleton structure and further provide accommodation for deposited silicon. The silicon-based nanoparticles are attached to the pores, and the silicon-based nanoparticles and the porous carbon-based matrix particles can function synergistically so as to improve capacity and electrical conductivity of the silicon-carbon composite.

In any embodiment, the carbon-based matrix particles have a powder compaction density under a force of 50,000 N, noted as P g/cm³, of 0.4 ≤ P ≤ 1.1; optionally, 0.6 ≤ P ≤ 0.9.

In the present application, by adjusting the powder compaction density of the carbon-based matrix particles within a suitable range, it is allowed to enable a negative electrode film layer to have a high compaction density, which in turn ensures that secondary batteries have a high energy density.

In any embodiment, the carbon-based matrix particles have a real density, noted as ρ g/cm3, of 1.7≤ρ≤2.5; optionally, 1.9≤ρ≤2.2.

In the present application, by adjusting the real density of the carbon-based matrix particles within a suitable range, it is allowed to enable a negative electrode film layer to have a relatively high specific capacity, which in turn may improve energy density of secondary batteries.

In any embodiment, the carbon-based matrix particles include one or more of graphite, soft carbon, and hard carbon.

In any embodiment, the silicon-based nanoparticles comprise one or more of a silicon-oxygen compound, a pre-lithiated silicon-oxygen compound, amorphous silicon, crystalline silicon, and a silicon-carbon composite; optionally, the silicon-based nanoparticles comprise amorphous silicon.

In any embodiment, the silicon-based nanoparticles have a mass percentage in the silicon-carbon composite of greater than or equal to 40%; optionally 40%-60%.

In the present application, when the silicon-based nanoparticles have a mass percentage within the above range in the silicon-carbon composite, the silicon-carbon composite has a relatively high capacity.

In any embodiment, the silicon-carbon composite has a volume particle size Dv10 satisfying Dv10 ≤ 5 µm; optionally, 3 µm ≤ Dv10 ≤ 5 µm.

In any embodiment, the silicon-carbon composite has a volume particle size Dv50 satisfying Dv50 ≤ 10 µm; optionally, 5 µm ≤ Dv50 ≤ 8 µm.

In any embodiment, the silicon-carbon composite has a volume particle size Dv90 satisfying Dv90 ≤ 20 µm; optionally, 8 µm ≤ Dv90 ≤ 18 µm.

In any embodiment, the silicon-carbon composite has a particle size distribution satisfying (Dv90-Dv10)/Dv50≤1.6; optionally, 1.4≤(Dv90-Dv10)/Dv50≤1.6.

When the particle size of the silicon-carbon composite of the present application satisfies the above range, the silicon-carbon composite has a relatively stable structure and a better dynamic performance, which is conducive to improving first Coulomb efficiency of the silicon-carbon composite.

In any embodiment, the silicon-carbon composite has a specific surface area SSA satisfying: 2 m²/g≤SSA≤10 m²/g; optionally, 3 m²/g≤SSA≤7 m²/g.

When the specific surface area SSA of the silicon-carbon composite of the present application satisfies the above range, the specific surface area has a moderate range, and the material has a better dynamic performance, which is conducive to first Coulomb efficiency of the material.

A second aspect of the present application provides a method of preparing a silicon-carbon composite comprising the steps of: mixing a crosslinking resin, a porogenic agent and a solvent to form a hybrid system; preheating the hybrid system to volatilize the solvent and allow the crosslinking resin to cure to form a solid resin; breaking the solid resin to form a granular resin; carbonizing the granular resin to volatilize the porogenic agent and to etch the granular resin to form carbon-based matrix particles having a three-dimensional crosslinked network structure; and generating silicon-based nanoparticles by chemical vapor deposition from a gas comprising a silicon precursor, with at least a portion of the silicon-based nanoparticles attached to pores of the carbon-based matrix particles.

In any embodiment, the crosslinking resin is added in a mass content, noted as a1, based on the total mass of the hybrid system; the solvent is added in a mass content, noted as a2, based on the total mass of the hybrid system; and the hybrid system satisfies: 0.1 ≤ a1/a2 ≤ 10; optionally, 0.5 ≤ a1/a2 ≤ 2.

As a result, when the mass content of the crosslinking resin and the mass content of the solvent are controlled within the above range in the present application, it is allowed to ensure that the solvent can fully dissolve the crosslinking resin and the porogenic agent, and that the three components form a homogeneous hybrid system; and it is allowed to form a pore channel with a suitable pore size during evaporation of the solvent, and that the solid resin formed has a good mechanical strength.

In any embodiment, the crosslinking resin is added in a mass content, noted as a1, based on the total mass of the hybrid system; the porogenic agent is added in a mass content, noted as a3, based on the total mass of the hybrid system; and the hybrid system satisfies: 0.1 ≤ a1/a3 ≤ 5; optionally, 0.5 ≤ a1/a3 ≤ 3.

As a result, when the mass content of the crosslinking resin and the mass content of the porogenic agent are controlled within the above range in the present application, it is conducive to absorption of water by the porogenic agent to promote curing of the crosslinking resin; and it is allowed to ensure the formation of a pore channel with a relatively small pore size during the carbonization process.

In any embodiment, the preheating step is carried out at a temperature of 60°C to 120°C, optionally 60°C to 80°C.

In any embodiment, the preheating step is carried out for a period of t1 ≥ 10 h, optionally 15h to 20h.

As a result, when the temperature and/or period of the preheating steps are controlled within the above range in the present application, it is allowed to ensure that the crosslinking resin is fully cured; and it is allowed to ensure that the solvent has a relatively low evaporation rate, which is conducive to formation of a pore channel structure with a suitable pore size, thereby ensuring structural stability of the solid resin.

In any embodiment, the carbonizing step comprises a first carbonizing step and a second carbonizing step, in which the first carbonizing step is carried out at a temperature of 500°C to 800°C, and the first carbonizing step is carried out at a period of 2h to 3h; and/or, the second carbonizing step is carried out at a temperature of 800°C to 1000°C, and the second carbonizing step is carried out at a period of 3h to 5h.

As a result, the first carbonizing step may be carried out at a constant temperature, during which a slow vaporization process of the porogenic agent may occur, and in the process of vaporization and volatilization of the porogenic agent, the porogenic agent etches internal structure of the resin so as to form pores with a relatively small pore size, and a pore structure in an overall homogenous form, thereby constituting a preliminary carbon skeleton structure. The second carbonizing step is carried out a relatively high temperature, during which the porogenic agent can be quickly vaporized, which is conducive to a rapid completion of the pore-forming process. Moreover, through the multiple carbonizing step, it is allowed to ensure stability of skeleton structure of the porous carbon-based matrix particles as well as a suitable porosity.

In any embodiment, based on the mass of the carbon-based matrix particles, the silicon precursor is added in an amount of greater than or equal to 40%; optionally, from 40% to 60%. When the addition amount of the silicon precursor satisfies the above range, it is possible to enable silicon based nanoparticles to be uniformly dispersed in pores of the carbon-based matrix particles, thereby ensuring capacity of the silicon-carbon composite.

In any embodiment, the chemical vapor deposition is carried out at a deposition temperature of less than or equal to 600°C; optionally, of 450°C to 550°C. The deposition temperature ensures silicon nanoparticles to be effectively generated from the silicon precursor and to be deposited within the carbon-based matrix particles.

A third aspect of the present application provides a secondary battery comprising a negative electrode plate comprising the silicon-carbon composite in any embodiment of the first aspect of the present application, or the silicon-carbon composite prepared by the method in any embodiment of the second aspect of the present application.

A fourth aspect of the present application provides an electrical device comprising the secondary battery of the third aspect of the present application.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person skilled in the art can obtain other drawings based on the accompanying drawings without creative work.
FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.
FIG. 7 is a cross-sectional morphology view of the porous carbon-based matrix particles shown in Example 1 of the present application.
FIG. 8 is a partially enlarged view of the porous carbon-based matrix particles shown in FIG. 7.
FIG. 9 is a cross-sectional morphology view of the porous carbon-based matrix particles shown in Example 1.

In the drawings, the accompanying drawings are not necessarily drawn to an actual scale.

The reference sings in the accompanying drawings are illustrated as follows:
1 - battery pack, 2 - upper case, 3 - lower case, 4 - battery module,
5 - secondary battery, 51 - casing, 52 - electrode assembly,
53- cover plate;
6- electrical device.

### DETAILED DESCRIPTION

Hereinafter, embodiments of the silicon-carbon composite, the method for the preparation thereof, the secondary battery, and the electrical device of the present application will be described in detail. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution. Unless stated otherwise, all technical features and optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

With popularization of application range of secondary batteries, the requirements for performances of the secondary batteries, such as energy density, have gradually increased. Negative electrode active materials have a significant impact on performances of secondary batteries, and carbon and silicon have been widely studied as common materials for negative electrode active materials. The carbon particles have a low theoretical specific capacity, and low lithium intercalation potential, which is easy to cause lithium precipitation and safety problems. Silicon at room temperature may form silicon lithium alloy with lithium, and has a relatively high theoretical specific capacity; and silicon has a slightly higher lithium intercalation potential than graphite, and thus can reduce the risk of lithium precipitation. However, micron-sized silicon material in the process of intercalation and deintercalation of lithium has a volume change of greater than 300%, i.e. a large volume change. The silicon particles whose volume continues to change are likely to cause rupture and regeneration of solid electrolyte interface membrane (Solid-Electrolyte Interphase, SEI membrane) on the surface of active material, and the continuous growth of the SEI membrane not only will continue to consume lithium and electrolyte, but also limit transmission of lithium ions, reduce electrical contact of the active material, and increase impedance. Moreover, there is also a phenomenon of rupture pulverization of the micrometer-sized silicon material, and the rupture pulverization will cause the continuous exposure of fresh silicon surface and the formuation of new SEI membrane, which increase thickness of the SEI membrane, and result in an increased lithium ion transmission path.

In view of the advantages and disadvantages of carbon particles and silicon particles, the inventor considered compounding carbon particles and silicon particles. However, after in-depth research by the inventor, it was found that a simple compounding operation could not effectively improve structural stability of the resulting negative electrode active material, and thus could not improve cycle life and energy density of secondary batteries.

In view of the above problems, the inventors make an improved silicon-carbon composite based on carbon-based matrix particles having a three-dimensional network interconnecting pore structure within which silicon-based nanoparticles are formed, wherein more than two pores of the carbon-based matrix particles are interlaced and connected with each other, which can provide more space for the silicon-based nanoparticles, and can be used for storage of a large amount of silicon. Upon compounding the porous carbon-based matrix particles with the silicon-based nanoparticles, the silicon-based nanoparticles are not easy to agglomerate, and can be uniformly dispersed in pores of the carbon-based matrix particles. After the carbon-based matrix particles are compounded with the silicon-based nanoparticles, the resulting silicon-carbon composite can have an improved electrical conductivity and meanwhile the carbon matrix particle may alleviate volume change of silicon in the process of intercalation-deintercalation of lithium and fully withstand stress changes of the silicon-based nanoparticles, ensuring structural stability of the silicon-carbon composite, and improving cycle stability and storage lithium capacity of the silicon-carbon composites. Thus, secondary batteries adopting the silicon carbon composite has improved cycle performance and energy density. The technical solution of the silicon-carbon composite is explained in detail next.

### Silicon-carbon composite

In a first aspect, the present application provides a silicon-carbon composite, the silicon-carbon composite comprising carbon-based matrix particles, the carbon-based matrix particles comprising a three-dimensional network interconnecting pore structure; and silicon-based nanoparticles, at least a portion of which is provided in the three-dimensional network interconnecting pore structure.

The three-dimensional network interconnecting pore structure typically refers to a structure in which two or more pores are interconnected or staggered and share pore volume with each other in the pore structure as formed of the carbon-based matrix particles.

The carbon-based matrix particles of the present application have a stable porous skeleton structure, which has a strong support capacity, exhibits a high stress capacity, and has excellent mechanical properties and electrical conductivity. The carbon-based matrix particles comprise a three-dimensional network interconnecting pore structure, which allows more space for the silicon-based nanoparticles to be set up, and can be used for storage of a large amount of silicon. Upon compounding the porous carbon-based matrix particles with the silicon-based nanoparticles, the silicon-based nanoparticles are not easy to agglomerate, and can be uniformly dispersed in pores of the carbon-based matrix particles. After the carbon-based matrix particles are compounded with the silicon-based nanoparticles, the resulting silicon-carbon composite can have an improved electrical conductivity while the carbon matrix particle may alleviate volume change of silicon in the process of intercalation-deintercalation of lithium and fully withstand stress changes of the silicon-based nanoparticles, ensuring structural stability of the silicon-carbon composites, and improving cycle stability and lithium capacity of the silicon-carbon composites. Thus, secondary batteries adopting the silicon carbon composite has improved cycle performance and energy density.

The pore structure of the silicon-carbon composite can be tested using equipment and methods known in the art. For example, it can be measured by using a scanning electron microscope (e.g., a ZEISS Sigma 300). As an example, the testing can be done in the following steps: first of all, a negative electrode plate comprising the silicon-carbon composite is cut into a sample to be tested of a certain size (e.g., 6mm x 6mm), the sample to be tested is clamped with two thermally conductive sheets (e.g., copper foil) and is fixed with an adhesive (e.g., double-sided adhesive) to the sheets, on which a certain mass (e.g., about 400g) of a leveling iron is placed for a certain period (e.g., 1h ), so that the gap between the sample to be tested and the copper foil would be as small as possible, and then the edge of the sample are cut with scissors, and the resulting sample is adhere to a sample stage with a conductive adhesive, with the sample slightly protruding the sample stage edge. The sample stage is loaded into a sample rack and lock fixed, and then turn on an argon ion cross-section polisher (such as IB-19500CP) power and vacuum (e.g., 10 Pa -4Pa), set an argon flow (e.g., 0.15MPa) and a voltage (e.g., 8KV) and a polishing time (e.g., 2 hours), adjust the sample stage in a swing mode to start polishing. After polishing, a scanning electron microscope (e.g., ZEISS Sigma 300) is used to obtain a picture of ion-polished cross-section topography (CP) of the sample to be tested.

The inventors of the present application have found, after thorough research, that when the silicon-carbon composite of the present application satisfy the above-described design, it may further improve performances of batteries can be further improved if optionally satisfying one or more of the following parameters.

In some embodiments, a pore size of at least a portion of pores in a surface region of the carbon-based matrix particles is larger than a pore size of pores in an interior region of the carbon-based matrix particles.

The surface region is a region comprising a depth of 500 nm-800 nm extending from a surface of the carbon-based matrix particles toward interior of the particles; and the interior region is other regions of the carbon-based matrix particles than the surface region.

In some embodiments, the three-dimensional network interconnecting pore structure exhibits a laminar distribution in the carbon-based matrix particles.

In some embodiments, the silicon-carbon composite satisfies: 1.00 < P₂₁/P₁₁ ≤ 1.20; optionally, 1.02 ≤ P₂₁/P₁₁ ≤ 1.10, in which P₁₁ in g/cm³ denotes a powder compaction density of the silicon-carbon composite after undergoing 20-second press once under a force of 20,000N, and P₂₁ in g/cm³ denotes a powder compaction density of the silicon-carbon composite after undergoing 20-second press under a force of 20,000N for 20 times.

In some embodiments, 1.10 ≤ P₁₁ ≤ 1.40; optionally, 1.12 ≤ P₁₁ ≤ 1.35.

When P₂₁/P₁₁ is denoted as M, the value of M can be used to indicate the change in stress-strain capacity during compaction of the silicon-carbon composite. When the value of M is within the range described above, the silicon-carbon composite has a relatively strong compression resistance, so as to enable the negative electrode active material adopting the silicon-carbon composite to have an improved compression resistance and to ensure structural stability of the negative electrode film layer, which in turn further improves cycle performances of batteries. As an example, P₂₁/P₁₁ may be 1.00, 1.02, 1.10, or 1.20. When P₂₁/P₁₁ is 1.00, it indicates that the silicon-carbon composite has a better compression resistance and is less prone to compression deformation.

The powder compaction density of material has a known meaning in the art and can be tested by methods known in the art. For example, it can be tested with reference to GB/T 24533-2009, with an electronic pressure testing machine (e.g., UTM7305): a certain mass G of a powder sample to be tested is placed on a special mold for compaction with a bottom area S, different pressures are set (20,000N or 50,000N can be used in this application) and held for 20s. After removing the pressure, it is allowed to stand for 10s, and then the thickness H of the sample subjected to the powder compaction at that pressure on the equipment is read out, and then the compaction density of the material at that pressure is calculated to obtain, i.e., the compaction density at that pressure = G/(H*S).

The silicon-carbon composite of the present application has a specific structure, and the powder compaction density of the silicon-carbon composite under the above test conditions is controlled within a particular range, it is allowed that the silicon-carbon composite has a higher specific capacity while further having a better compression resistance, which effectively ensures structural stability of the negative electrode film layer, so as to enable the secondary battery containing the material to have a higher energy density and a better cycle performance.

In some embodiments, the carbon-based matrix particles have a total volume of pores with a diameter greater than 100 nm, noted as V₁ cm³/g, the carbon-based matrix particles have a total volume of pores with a diameter less than or equal to 100 nm, noted as V₂ cm³/g, and the carbon-based matrix particles satisfy: 1 < V₂/V₁ ≤ 30; optionally, 3 ≤ V₂/ V₁ ≤ 25. V₂/ V₁ may be 1.5, 2.5, 2.8, 3.0, 3.5, 4, 4.5, 5, 6, 7, 8, 9, 10, 15, 20, or 25; or a range constituted by any two of the above values. For example, 1.5 ≤V₂/V₁ ≤ 6, 2.5 ≤V₂/V₁ ≤ 10, 3 ≤V₂/V₁ ≤ 8, 2.8 ≤V₂/V₁ ≤ 6, 3 ≤ V₂/V₁ ≤ 10.

By regulating the ratio of the total volume of pores having a specific size in the porous carbon-based matrix particles, it is allowed to ensure that the carbon-based matrix particles have a moderate pore size distribution, which is conducive to subsequent incorporation of a silicon-containing precursor into pores of the carbon-based matrix particles, and reduces the risk of silicon being deposited on surface of the carbon-based matrix particles; and which is also conducive to deposition on the carbon-based matrix particles towards saturation so as to enable the resulting silicon carbon composite particles formed after the deposition of silicon to have an appropriate specific surface area, and ensure its reversible capacity.

The above total volume of pores can be determined using instruments and methods well known in the art. For example, the method can refer to GB/T 19587-2004, and a mesoporous pore size distribution test of BJH (Barret joyner Halenda) is adopted, in which a gas adsorption and desorption method under a micro-mesoporous model is adopted for testing and adsorption data is chosen for the determination and counting of the total volume V1 of pores with a diameter greater than 100 nm and the total volume V2 of pores with a diameter equal to or less than 100 nm

In some embodiments, the carbon-based matrix particles have a total volume of pores with a pore diameter greater than 100 nm, noted as V₁ cm³/g, as measured using a gas adsorption-desorption method and V₁ ≥ 0.01, and optionally, 0.01 ≤ V₁ ≤ 0.5.

In some embodiments, the carbon-based matrix particles have a total volume of pores with a diameter less than or equal to 100 nm, noted as V₂ cm³/g, as measured using a gas adsorption-desorption method and V₂ ≥ 0.05, and optionally, 0.05 ≤ V₂ ≤ 1.1.

In some embodiments, the carbon-based matrix particles have a porosity, noted as W, of 40% ≤ W ≤ 80%; optionally, 50% ≤ W ≤ 70%.

When the carbon-based matrix particles in the present application has a porosity satisfying the above range, its pores occupy an appropriate volume in its skeleton structure, which can ensure stability of the skeleton structure and further provide accommodation for deposited silicon. The silicon-based nanoparticles are attached to the pores, and the silicon-based nanoparticles and the porous carbon-based matrix particles can function synergistically so as to improve capacity and electrical conductivity of the silicon-carbon composite. Optionally, 40 ≤ W ≤ 80. As an example, the porosity W% of the porous carbon-based matrix particles may be 10%, 15%, 20%, 25%, 30%, 35%, 40%, 45%, 50%, 55%, 60%, 65%, 70%, 75%, or 80%; or a range constituted by any two of the above value.

In the present application, the porosity refers to a ratio of the volume of pores inside particles occupying the total volume of the carbon-based matrix particles. The porosity can be measured by a gas displacement method according to GB/T24586 in which porosity W = (L1-L2)/L1*100%, where L1 is an apparent volume of a sample and L2 is a true volume of a sample.

In some embodiments, the carbon-based matrix particles have a powder compaction density under a force of 50,000 N, noted as P g/cm³, of 0.4 ≤ P ≤ 1.1; optionally, 0.6 ≤ P < 0.9 wherein P may be tested in accordance with the method of testing powder compaction density of materials provided above.

By adjusting the powder compaction density of the carbon-based matrix particles within a suitable range, it is allowed to enable a negative electrode film layer to have a high compaction density, which in turn ensures that secondary batteries have a high energy density. In addition, by adjusting the powder compaction density of the carbon-based matrix particles within a suitable range, it is also possible to make the negative electrode film layer have a stronger ability to maintain its pore structure during a cycle process, whereby the negative electrode plate has a better electrolyte wettability, which can better enhance cycle performance of secondary batteries. As an example, the powder compaction density P in g/cm³under a force of 50,000 N may be 0.6 g/cm³, 0.65 g/cm³, 0.7 g/cm³, 0.75 g/cm³, 0.8 g/cm³, 0.85 g/cm³, 0.9 g/cm³, 1.0 g/cm³, or 1.1 g/cm³; or a range constituted by any two of the above value.

In some embodiments, the carbon-based matrix particles have a real density, noted as ρ g/cm3, of 1.7≤ρ≤2.5; optionally, 1.9≤ρ≤2.3.

By adjusting the real density of the carbon-based matrix particles within a suitable range, it is allowed to enable a negative electrode film layer to have a relatively high specific capacity, which in turn may improve energy density of secondary batteries. As an example, the real density ρ in g/cm³ of the carbon-based matrix particles may be 1.7 g/cm³, 1.8 g/cm³, 1.9 g/cm³, 2.0 g/cm³, 2.1 g/cm³, 2.2 g/cm³, 2.3 g/cm³, 2.4 g/cm³, or 2.5 g/cm³; or a range consisting of any two of the above values.

In the present application, the real density of material has a known meaning in the art, which refers to an actual mass of solid material per unit volume in an absolutely dense state, i.e., a density of materials after removing the internal voids of the materials or the voids between particles; and which may be tested using instruments and methods known in the art. For example, the test method may refer to GB/T 24586-2009, and the test instrument may adopt a real density tester. As an example, it can be operated in accordance with the following steps: take a clean and dry sample cup and place it on a balance with a target operation, add a certain amount of powder sample to the sample cup (e.g., the sample can account for 1/2 of volume of the sample cup), record the mass of the sample taken, place the sample cup containing the sample on a True Density Tester in a sealed condition, fill with helium gas, detect pressure of the gas in a sample chamber and an expansion chamber, then calculate a real volume according to Bohr's law to calculate the real density.

In some embodiments, the carbon-based matrix particles include one or more of graphite, soft carbon, and hard carbon. The above materials, when prepared into a porous structure, are favorable for placement of silica-based nanoparticles in pores of the porous structures; and their structural stability is relatively high.

In some embodiments, the silicon-based nanoparticles comprise one or more of a silicon-oxygen compound, a pre-lithiated silicon-oxygen compound, amorphous silicon, crystalline silicon, and a silicon-carbon composite; optionally, the silicon-based nanoparticles comprise amorphous silicon.

The amorphous silicon can expand uniformly in all directions, thereby causing uniform extrusion on the porous carbon-based matrix particles, and the porous carbon-based matrix particles can effectively alleviate volume expansion of the amorphous silicon. The crystalline silicon has a relatively more stable structure, which is more conducive to fully exerting its capacity characteristics. The silicon-carbon complex is formed in pores of the porous carbon-based matrix particles after carbon and silicon are compounded as a compound in advance, and its volume expansion is relatively small, which can alleviate stress caused to the porous carbon-based matrix particles. As an example, the silicon-carbon complex may be silicon carbide.

The crystal structure of the negative electrode active material can be tested using equipment and methods known in the art. As an example, this can be done according to the following steps: selecting a microgrid with a certain diameter (e.g., 3 mm in diameter), holding edge of the microgrid with a pointed tweezer, and gently laying it flat on a white filter paper with its membrane side facing upward (observed under a light to show its membrane side, i.e. a shiny surface); taking an appropriate amount of a silicon particles sample (e.g., 1 g) and adding it to a beaker containing an appropriate amount of ethanol, and ultrasonically oscillating it for 10 min to 30 min; then dropping 2-3 drops of the sample to be tested on the microgrid using a glass capillary tube; after oven baking for 5 minutes, placing the microgrid with the sample drops to be tested on the sample stage, and then observing it with a transmission electron microscope (e.g., Hitachi HF-3300S Cs-corrected STEM) at a certain magnification (e.g., 60,000×), to obtain transmission electron microscopy (TEM) image of the sample to be tested. If there are distinct lattice stripes (e.g., a spacing between the stripes is approximately equal to 0.331 nm), the sample is crystalline silicon; if no lattice fringes are observed, the sample is amorphous silicon.

In some embodiments, the silicon-based nanoparticles have a mass percentage in the silicon-carbon composite of greater than or equal to 40%; optionally 40%-60%.

When the mass percentage of the silicon-based nanoparticles in the silicon-carbon composite is within the above range, the silicon-carbon composite has a relatively high capacity.

The mass of the silicon-based nanoparticles in the silicon-carbon composite can be tested using methods and equipment known in the art. For example, it can be determined with reference to the EPA 6010D-2014. Specifically, it can be tested using ICP-OES (Elemental Analysis - Inductively Coupled Plasma Emission Spectrometry), whereby solid to be tested is first dissolved into a liquid with a strong acid, and then subsequently, the liquid is introduced into a ICP light source by way of atomization, and further the gaseous atoms to be tested are restored from the excited state to the ground state after ionization and excitation in a strong magnetic field; energy is released in the above process and recorded as different characteristic spectral lines for quantitative analysis of trace elements.

The mass of carbon element in the silicon-carbon composite can be tested using methods and equipment known in the art. For example, a TG (Thermal Weight Loss) test can be used, whereby the silicon-carbon composite as a sample is heat-treated under oxygen-containing conditions (ramping up to 1000°C from 25°C), the masses of the sample before and after the heat-treatment are recorded, and the difference between the masses of the sample before and after the heat-treatment is the mass of carbon that has been burned away, from which it can be known the carbon content in the sample.

In some embodiments, the silicon-based nanoparticles have a particle size, noted as Dsi in nm, Dsi ≤ 100; optionally, 2 ≤ Dsi ≤ 80.

The silicon-based nanoparticles having a relatively small particle size can significantly alleviate higher pressure caused by change in the volume of silicon, which is conducive to ensuring an overall structural stability of the silicon-carbon composite, and improving a cycle stability of secondary batteries; and it can significantly shorten transmission distance of lithium ions, which is conducive to improving kinetic performance of the silicon-carbon composite. Optionally, 10 ≤ Dsi ≤ 80; as an example, the particle size of the silicon-based nanoparticles may be 2 nm, 3 nm, 5 nm, 8 nm, 10 nm, 12 nm, 15 nm, 20 nm, 25 nm, 30 nm, 40 nm, 50 nm, 60 nm, 70 nm, or 80 nm; or a range consisting of any two of the above values.

In the present application, the particle size of the silicon-based nanoparticles can be determined by measuring an XRD pattern of the sample according to JIS/K0131-1996, based on the XRD pattern of the sample, taking a half-height peak width, β, and a diffraction angle, θ, of diffraction peaks of the crystalline surface of Si (111), and substituting them into a Debye-Scherrer formula to calculate particle size of the silicon-based nanoparticles. The Debye-Scherrer formula is as follows: dhkl=k λ/(βcosθ), wherein Dhkl denotes particle size of the silicon nanoparticles in nm; k denotes Scherrer's constant, 0.89; λ denotes a wavelength of incident X-rays, 0.15406 nm; β denotes the half-height peak width of the diffraction peaks in rad; and θ denotes the diffraction angle in degrees.

In some embodiments, the silicon-carbon composite has a volume particle size Dv10 satisfying Dv10 ≤ 5 µm; optionally, 3 µm ≤ Dv10 ≤ 5 µm. As an example, Dv10 may be 1 µm, 2 µm, 3 µm, 4 µm, or 5 µm; or a range consisting of any two of the above values.

In some embodiments, the silicon-carbon composite has a volume particle size Dv50 satisfying Dv50 ≤ 10 µm; optionally, 5 µm≤Dv50 ≤ 8 µm. As an example, Dv50 can be 1 µm, 2 µm, 3 µm, 4 µm, 5 µm, 6 µm, 7 µm, 8 µm, 9 µm, or 10 µm; or a range consisting of any two of the above values.

When the volume particle size Dv 50 of the silicon-carbon composite of the present application satisfies the above range, the silicon-carbon composite has a relatively stable structure and a better dynamic performance, which is conducive to improving first Coulomb efficiency of the silicon-carbon composite.

In some embodiments, the silicon-carbon composite has a volume particle size Dv90 satisfying Dv90 ≤ 20 µm; optionally, 8 µm ≤ Dv90 ≤ 18 µm. As an example, the Dv90 may be 1 µm, 2 µm, 3 µm, 4 µm, 5 µm, 6 µm, 7 µm, 8 µm, 9 µm, 10 µm, 11 µm, 12 µm, 13 µm , 14 µm, 15 µm, 16 µm, 17 µm, or 18 µm; or a range consisting of any two of the above values.

In some embodiments, the silicon-carbon composite has a particle size distribution satisfying (Dv90-Dv10)/Dv50 ≤ 1.6. As an example, (Dv90-Dv10)/Dv50 may be 1.6, 1.5, 1.4, 1.3, 1.2, 1.1, 1, or 0.75. Optionally, 1.4 ≤ (Dv90-Dv10)/Dv50 ≤ 1.6.

When the particle size distribution of the silicon-carbon composite of the present application satisfies the above range, the silicon-carbon composite has a relatively moderate overall average particle size and its particles are distributed more evenly, which is conducive to improving homogeneity of properties of the silicon-carbon composite as a whole.

Dv10, Dv50, and Dv90 of materials are all well-known meanings in the field, and can be tested by methods known in the field. For example, it can be determined using a laser particle size analyzer (e.g., Malvern Master Size 3000) with reference to GB/T 19077.1-2016.

Herein Dv10, Dv50, and Dv90 are physically defined as follows:
Dv10 refers to a particle size at which a cumulative volume distribution percentage reach 10% for the material;
Dv50 refers to a particle size at which a cumulative volume distribution percentage reach 50% for the material;
Dv90 refers to a particle size at which a cumulative volume distribution percentage reach 90% for the material;
In any embodiment, the silicon-carbon composite has a specific surface area SSA satisfying: 2 m²/g≤SSA≤10 m²/g.

When the specific surface area SSA of the silicon-carbon composite of the present application satisfies the above range, the silicon-carbon composite has a moderate specific surface area and a better dynamic performance, which is conducive to first Coulomb efficiency of the material. Optionally, 3 m²/g ≤ SSA ≤ 7 m²/g. As an example, the specific surface area SSA of the silicon-carbon composite may be 2 m²/g, 3 m²/g, 4 m²/g, 5 m²/g, 6 m²/g, 7 m²/g, 8 m²/g, 9 m²/g, or 10 m²/g; or a range constituted by any two of the above values.

In the present application, the specific surface area SSA has a known meaning in the art, which is usually expressed in m²/g, and may be tested by methods and instruments known in the art. For example, it may be tested by an inert gas (e.g., nitrogen) adsorption specific surface area analysis test method with reference to GB/T 19587-2017 and calculated by a BET (Brunauer Emmett Teller) method, wherein the nitrogen adsorption specific surface area analysis test method may be performed by a Tri-Star 3020 type specific surface area pore size analysis tester from Micromeritics, USA.

### Method of preparing a silicon-carbon composite

In a second aspect, the present application further provides a method of preparing a silicon-carbon composite.

The method comprises the steps of:
S100, mixing a crosslinking resin, a porogenic agent and a solvent to form a hybrid system;
S200, preheating the hybrid system to volatilize the solvent and allow the crosslinking resin to cure to form a solid resin;
S300, breaking the solid resin to form a granular resin;
S400, carbonizing the granular resin to volatilize the porogenic agent and to etch the granular resin to form carbon-based matrix particles having a three-dimensional crosslinked network structure; and
S500, generating silicon-based nanoparticles by chemical vapor deposition from a gas comprising a silicon precursor, with at least a portion of the silicon-based nanoparticles attached to pores of the carbon-based matrix particles.

The present application obtains carbon-based matrix particles by preparing a crosslinking resin, and the carbon-based matrix particles have a three-dimensional network interconnecting pore structure, which pore structure comprises more than two interlacing pores that can be connected with each other. Herein it is not excluded that some of the pores are provided in parallel with each other. The carbon-based matrix particles having a three-dimensional crosslinked network structure have a better mechanical strength, which has a stronger support capacity, exhibits a higher resistance to stress, and has excellent mechanical properties and electrical conductivity. Silicon precursor is deposited on the carbon-based matrix particles with a three-dimensional crosslinked network structure through a chemical vapor deposition to form silicon-based nanoparticles, so as to enable the carbon-based matrix particles and silica-based nanoparticles to compound to form a silicon carbon composite, in which the carbon and silicon elements can function synergistically as improving electrical conductivity and capacity of the silicon-carbon composites and further the carbon matrix particle may alleviate volume expansion of silicon in the process of intercalation-deintercalation of lithium to some extend thereby improving cycle stability and lithium storage capacity of the silicon-carbon composites. Thus, secondary batteries adopting the silicon carbon composite has improved cycle performance and energy density.

Especially, when the silicon-carbon composite satisfies the following requirements: the carbon-based matrix particles have a surface region and an internal region disposed within the surface region, and at least a portion of the pores in the surface region of the carbon-based matrix particles have a pore size larger than the internal region of the carbon-based matrix particles, the carbon and silicon elements can better synergize and improve performances of secondary batteries.

In step S100, the crosslinking resin, the porogenic agent, and the solvent are mixed into a hybrid system.

In some embodiments, the crosslinking resin may include one or more of a linear phenolic resin, a soluble phenolic resin, an epoxy resin, and a polyurethane, a furan resin, and a urea-formaldehyde resin. The above-described crosslinking resin itself has a certain degree of crosslinking, and its structural stability is relatively good.

In some embodiments, the solvent may include a liquid alcohol, an ether, a ketone, and the like. As an example, the liquid alcohol includes one or more of methanol, ethanol, ethylene glycol, polyethylene glycol (low molecular weight), glycerol, and isopropanol. The liquid alcohol is capable of dissolving the crosslinking resin and the porogenic agent to enable the three material to form into a more homogeneous system. During preheating of the mixed system, the solvent evaporates in large quantities, and in the process of solvent evaporation, the crosslinking resin cures gradually and forms a larger pore structure inside, thereby initially forming a porous skeleton structure. The ether may include butyl ether and dimethyl ether and the like. The ketones may include acetone and the like.

Further, the crosslinking resin is added in a mass content, noted as a1, based on the total mass of the hybrid system; the solvent is added in a mass content, noted as a2, based on the total mass of the hybrid system; and the hybrid system satisfies: 0.1 ≤ a1/a2 ≤ 10.

When the mass content of the crosslinking resin and the mass content of the solvent are controlled within the above ranges in the present application, it is allowed to ensure that the solvent can fully dissolve the crosslinking resin and the porogenic agent, and that the three components form a homogeneous hybrid system; and it is allowed to form the particular pore structure of the present application, and that the solid resin formed has a good mechanical strength. Optionally, 0.5 ≤ a1/a2 ≤ 2.As an example, a1/a2 may be 0.1, 0.2, 0.5, 0.8, 1, 1.5, 2, 3, 4, 5, 6, 7, 8, 9, or 10; or a range consisting of any two of the above values.

In some embodiments, the porogenic agent comprises one or more of a chlorinated salt, a carbonate, an acetate. As an example, the chlorinated salt may include one or more of sodium chloride, potassium chloride, and zinc chloride; the carbonate may include one or more of sodium carbonate, ammonium carbonate, and potassium carbonate; and the acetate may include one or more of zinc acetate, ammonium acetate, and sodium acetate. The above porogenic agent is capable of etching structure of a granular resin during its carbonization process to form channels with smaller pore diameters, and these channels are capable of communicating with channels formed by solvent evaporation, thereby being more conducive to formation of the specific pore structure of the present application; and the porogenic agent is capable of expanding the channels formed by solvent evaporation, thereby ensuring that the porous structure has a suitable pore diameters range.

Further, the crosslinking resin is added in a mass content, noted as a1, based on the total mass of the hybrid system; the porogenic agent is added in a mass content, noted as a3, based on the total mass of the hybrid system; and the hybrid system satisfies: 0.1 ≤ a1/a3 ≤ 5.

When the mass content of the crosslinking resin and the mass content of the porogenic agent are within the above ranges, it is conducive to the absorption of water by the porogenic agent to promote curing of the crosslinking resin; and it is allowed to ensure the formation of a pore channel with a relatively small pore size during the carbonization process. Optionally, 0.5 ≤ a1/a3 ≤3. As an example, a1/a3 may be 0.1, 0.2, 0.3, 0.5, 0.6, 0.8, 1, 1.5, 2, 2.5, 3, 3.5, 4, or 5; or a range constituting any two of the above values.

In some embodiments, in step S100, the mixing is done with stirring as a mixed system; the stirring has a speed of 100 r/min to 1500 r/min.

Mixing the mixed system with stirring as described above facilitates uniform mixing of the crosslinking resin, the porogenic agent, and the solvent. Optionally, the stirring speed is from 500 r/min to 1000 r/min. As an example, the stirring speed may be 100 r/min, 120 r/min, 150 r/min, 180 r/min, 200 r/min, 250 r/min, 300 r/min, 350 r/min, 400 r/min, 450 r/min, 500 r/min, 550 r/min, 600 r/min, 650 r/min, 700 r/min, 750 r/min, 800 r/min, 900 r/min, 1000 r/min, 1100 r/min, 1200 r/min, 1300 r/min, 1400 r/min or 1500 r/min; or a range consisting of any two of the above values.

In step S200, the mixed system is subjected to heat treatment, during which molecules in the crosslinking resin are continuously crosslinked to form macromolecules and dehydration occurs during the crosslinking process, and water that is removed is easily reacted with the porogenic agent, i.e., the porogenic agent is capable of absorbing water, which further facilitates occurrence of the crosslinking process and improves the degree of crosslinking.

In some embodiments, the preheating is carried out at a temperature of 60°C to 120°C, optionally 60°C to 80°C.

When the temperature of the preheating step is controlled within the above range, it is allowed to ensure that the crosslinking resin is fully cured; and the solvent has a relatively low evaporation rate, which is more conducive to formation of a particular channel structure of the present application, and can ensure structural stability of the solid resin, thereby improving compression resistance of silicon-carbon composites subsequently formed from the solid resin. As an example, the temperature of the preheating may be 60° C, 65° C, 70° C, 75° C, 80° C, 85° C, 90° C, 95° C, 100° C, 105° C, 110° C, 115° C, or 120° C; or a range consisting of any two of the above values.

In step S300, the solid resin is crushed to form a granular resin. In some embodiments, the solid resin may be reheated, and the reheating temperature is from 100°C to 200°C.

The reheating process can induce further volatilization of the solvent to continue formation of channels; and can promote further dehydration and cross-linking of the resin, improve mechanical strength of the granular resin, and improve structural stability of the granular resin.

In some embodiments, a process of multiple crushing, e.g., coarse crushing, fine crushing, etc., may be employed with a view to obtaining a granular resin that meets a predetermined particle size as a carbon precursor. The predetermined particle size range may be in the micrometer range.

In some embodiments, the crushing may be followed by operations such as decontamination, demagnetization, and particle size grading of the granular resin to ensure that the granular resin obtained meets process requirements. The decontamination, demagnetization, and particle size grading may be performed using techniques known in the art and are not limited herein.

In step S400, the granular resin is carbonized to form porous carbon-based matrix particles.

In some embodiments, the carbonizing step may be carried out at a temperature of from 500°C to 1200°C.

The carbonizing temperature in the above range ensures that the granular resin is sufficiently carbonized and is able to form a three-dimensional network interconnecting pore structure in the interior of the carbon-based matrix particles to facilitate deposition of the silicon-based nanoparticles, and that the formed carbon-based matrix particles have a skeleton structure with a high structural stability, and has good compression resistance.

Further, the carbonizing process may comprise a first carbonizing process and a second carbonizing process, in which the first carbonizing step is carried out at a temperature of 500°C to 800°C for a period of time of 2h to 3h, the second carbonizing step is carried out at a temperature of 800°C to 1000°C for a period of time of 3h to 5h, and the temperature of the first carbonizing process is less than the temperature of the second carbonizing process is less than the temperature of the second carbonization process. The first carbonizing process is carried out at a relatively slow heating rate, for example, at a rate of 1 to 2 °C /min, and the first carbonizing process after heating to a predetermined temperature, can be maintained at a constant temperature for a certain period of time, for example, for 1h, during which a slow vaporization process of the porogenic agent may occur, and in the process of vaporization and volatilization of the porogenic agent, the porogenic agent etches internal structure of the resin so as to form pores with a relatively small pore size, and a pore structure in an overall homogenous form, thereby constituting a preliminary carbon skeleton structure. The second carbonizing step is carried out at a relatively high temperature, during which the porogenic agent can be quickly vaporized, the porogenic agent in the form of gas is used to make pores in the carbon matrix and open the block between pores to form a three-dimensional network interconnecting pore structure, and at the same time, the peripheral part of the carbon matrix is gradually etched to expand the holes by the continuous escape of gases, so that the three-dimensional network interconnecting pore structure is in a layer-like distribution in the carbon-based matrix particles. Moreover, through the multiple carbonizing step, it is allowed to ensure stability of skeleton structure of the porous carbon-based matrix particles as well as a suitable porosity.

Further, the porous carbon-based matrix particles may be further sieved to obtain particles that meet particle size requirements. The sieving step may be carried out by means known in the art and is not limited herein.

In step S500, at least a portion of the silicon-based nanoparticles are attached to pores of the carbon-based matrix particles.

In some embodiments, based on the mass of the carbon-based matrix particles, the silicon precursor is added in an amount of greater than or equal to 40%; optionally, from 40% to 60%.

When the addition amount of the silicon precursor satisfies the above range, it is possible to enable silicon based nanoparticles to be uniformly dispersed in pores of the carbon-based matrix particles, thereby ensuring capacity of the silicon-carbon composite.

In some embodiments, the silicon precursor can include one or more of a silicon-oxygen compound, a pre-lithiated silicon-oxygen compound, amorphous silicon, crystalline silicon, and a silicon-carbon composite. The above-described silicon precursors are capable of forming nanoscale silicon-based particles in pores of the carbon-based matrix particles, which is favorable for uniform dispersion in the pores. As an example, the silicon carbon composite can be silicon carbide.

In some embodiments, the chemical vapor deposition is carried out at a deposition temperature of less than or equal to 600°C; optionally 450°C to 550°C. The deposition temperature ensures that the silicon precursor effectively generates silicon nanoparticles and is deposited within the carbon-based matrix particles.

In some embodiments, the carbon-based matrix particles may be pre-positioned in a heating chamber of a furnace for vapor phase deposition, and the heating chamber is evacuated using a vacuum pump. A protective gas is passed into the heating chamber, and after the protective gas fills the heating chamber, a gas comprising a silicon precursor is passed into the heating chamber and the heating chamber is maintained at a certain pressure.

In the present application, an inert gas may be employed as a protective gas, and the protective gas and the gas comprising the silicon precursor are jointly input onto the porous carbon-based matrix particles. As an example, the inert gas may include one or more of nitrogen, argon, and helium.

The crosslinking resin, the porogenic agent and the solvent are blended in situ as a homogeneous system, and the solvent and the porogenic agent co-create pores during heat treatment, and the solvent and the porogenic agent are capable of escaping from the interior of the crosslinking resin to the outside. The crosslinking resin is ultimately converted into a carbon material, forming a porous carbon skeleton structure with interconnecting pores. The porous carbon skeleton has a firm stress architecture and exhibits a good resistance to stress, and when it is used as a negative electrode active material in secondary batteries, it can improve structural stability of the negative electrode active material and further improve cycle performance of the secondary batteries.

### Secondary Battery

A third aspect of the present application provides a secondary battery.

The secondary battery comprises a positive electrode plate, a negative electrode plate, an electrolyte and a separator. During a charge and discharge process of batteries, active ions intercalate and deintercalate between the positive electrode plate and the negative electrode plate. The electrolyte functions as conducting active ions between the positive electrode plate and the negative electrode plate. The separator is disposed between the positive electrode plate and the negative electrode plate, which mainly functions as preventing short circuit of the positive and negative electrodes and at the same time allowing active ions to pass through.

### [Negative electrode plate]

A negative electrode plate comprises a negative electrode current collector and a negative electrode film layer provided on at least one surface of the negative electrode current collector and comprising a negative electrode active material.

In some embodiments, the negative electrode active material may comprise a silicon-carbon composite of any of the embodiments of the first aspect of the present application or a silicon-carbon composite prepared by the method of any of the embodiments of the second aspect of the present application.

As an example, the negative electrode current collector has two surfaces opposite to each other in the direction of its own thickness, and the negative electrode film layer is provided on either or both of two opposite surfaces of the negative electrode current collector.

In some embodiments, the negative electrode collector may be a metal foil or a composite current collector. For example, as a metal foil, a copper foil may be used. The composite current collector may include a polymeric material base layer and a metallic layer formed on at least one surface of the polymeric material base layer. The composite current collector may be formed by forming a metallic material (copper, copper alloys, nickel, nickel alloys, titanium, titanium alloys, silver and silver alloys, and the like) on a polymeric material base material, such as polypropylene (PP), polyethylene terephthalate (PET), polybutylene terephthalate (PBT), polystyrene (PS), polyethylene (PE), and the like.

In some embodiments, the negative electrode active material may be a negative electrode active material known in the art for use in secondary batteries. By way of example, the negative electrode active material may include at least one of artificial graphite, natural graphite, soft carbon, hard carbon, other silicon-based materials, tin-based materials, and lithium titanate. The other silicon-based materials may include elemental silicon, silicon oxides, and silicon nitrogen compounds. The tin-based materials may include at least one of elemental tin, a tin oxide, and a tin alloy material. The present application is not limited to these materials, and other conventionally known materials that can be used as negative electrode active materials for secondary batteries may also be used. These negative electrode active materials can be used alone, or in combination of two or more materials.

In some embodiments, the negative electrode film layer may further optionally comprise a binder. The binder may be at least one selected from styrene-butadiene rubber (SBR), polyacrylic acid (PAA), sodium polyacrylic acid (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may further optionally comprise a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode film layer optionally includes other additives, such as thickeners (e.g., sodium carboxymethylcellulose (CMC-Na)) and the like.

In some embodiments, the negative electrode plate may be prepared as described below. The above components for preparing the negative electrode plate, such as the negative electrode active material, the conductive agent, the binder, and any other components, are dispersed in a solvent (e.g., deionized water) to form a negative electrode slurry; the negative electrode slurry is applied to a negative electrode collector, followed by drying, cold pressing and the like, thereby obtaining the negative electrode plate.

### [Positive electrode plate]

A positive electrode plate comprises a positive electrode current collector and a positive electrode film layer provided on at least one surface of the positive electrode current collector and comprising a positive electrode active material.

As an example, the positive electrode current collector has two surfaces opposite to each other in the direction of its own thickness, and the positive electrode film layer is provided on either or both of two opposite surfaces of the positive electrode current collector.

In some embodiments, the positive electrode collector may be a metal foil or a composite current collector. For example, as a metal foil, an aluminum foil may be used. The composite current collector may include a polymeric material base layer and a metallic layer formed on at least one surface of the polymeric material base layer. The composite current collector may be formed by forming a metallic material (aluminum, aluminum alloys, nickel, nickel alloys, titanium, titanium alloys, silver and silver alloys, and the like) on a polymeric material base material, such as polypropylene (PP), polyethylene terephthalate (PET), polybutylene terephthalate (PBT), polystyrene (PS), polyethylene (PE), and the like.

In some embodiments, the positive electrode active material may be a positive electrode active material for use in batteries that is well known in the art. As examples, the positive electrode active material may include at least one of the following materials: lithium-containing phosphates with an olivine structure, lithium transition metal oxides, and their respective modified compounds. However, the present application is not limited to these materials, and other conventional materials that may be used as the positive electrode active material of the battery may also be used. These positive electrode active materials can be used alone, or in combination of two or more materials. Among them, examples of lithium transition metal oxides may include, but are not limited to, lithium cobalt oxides (e.g., LiCoO₂), lithium nickel oxides (e.g., LiNiO₂), lithium manganese oxides (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also be abbreviated as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), lithium nickel cobalt aluminum oxide (e.g., LiNi_{0.85}C_{0.15}Al_{0.05}O₂), and modified compounds thereof, and the like. Examples of lithium-containing phosphates with an olivine structure may include, but are not limited to, at least one of lithium iron phosphate (e.g., LiFePO₄ (also be abbreviated as LFP)), a composite of lithium iron phosphate and carbon, lithium manganese phosphate (e.g., LiMnPO₄), a composite of lithium manganese phosphate and carbon, lithium iron manganese phosphate, and a composite of lithium iron manganese phosphate and carbon.

In some embodiments, the positive electrode film layer optionally further comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer may further optionally comprise a conductive agent. The conductive agent may be at least one selected from superconducting carbon, acetylene black, carbon black, Ketjen black, carbon dots, carbon nanotubes, graphene, and carbon nanofiber.

In some embodiments, the positive electrode plate may be prepared as described below. The above components for preparing the positive electrode plate, such as the positive electrode active material, the conductive agent, the binder, and any other components, are dispersed in a solvent (e.g., N-methyl pyrrolidone) to form a positive electrode slurry; the positive electrode slurry is applied to a positive electrode collector, followed by drying, cold pressing and the like, thereby obtaining the positive electrode plate.

### [Electrolyte]

The electrolyte functions as conducting active ions between the positive electrode plate and the negative electrode plate. The present application has no specific limitations on the type of electrolyte, which may be selected as desired. For example, the electrolyte may be liquid, gel, or all-solid.

In some embodiments, an electrolytic solution is used as the electrolyte. The electrolytic solution includes an electrolyte salt and a solvent.

In some embodiments, as an example, the electrolyte salt may be at least one selected from lithium hexafluorophosphate, lithium tetrafluoroborate, lithium perchlorate, lithium hexafluoroarsenate, lithium bisfluorosulfonimide, lithium bis(trifluoromethane sulfonimide), lithium trifluoromethane sulfonate, lithium difluorophosphate, lithium difluorooxalate borate, lithium dioxalate borate, lithium difluorodioxalate phosphate and lithium tetrafluorooxalate phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolytic solution may further optionally include additives. For example, the additives may include negative electrode film-forming additives, positive electrode film-forming additives, and additives that can improve certain performances of battery, for example, additives that improve battery overcharge performance, additives that improve high-temperature performance of battery, and additives that improve low-temperature performance of battery.

### [Separator]

In some embodiments, the secondary batteries further comprise a separator. There is no particular limitation on the type of separator in the present application, and any well-known porous-structure separator with good chemical stability and mechanical stability may be used.

In some embodiments, materials of the separator may be at least one selected from glass fibers, non-woven fabrics, polyethylene, polypropylene and polyvinylidene fluoride. The separator may be a single-layer film or a multi-layer composite film, without any limitation. When the separator is a multi-layer composite film, materials of each layer may be the same or different, without any limitation.

In some embodiments, the positive electrode plate, the negative electrode plate, and the separator may be made into an electrode assembly by a winding process or a laminating process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. The material of the soft bag can be plastic, such as polypropylene, polybutylene terephthalate, and polybutylene succinate.

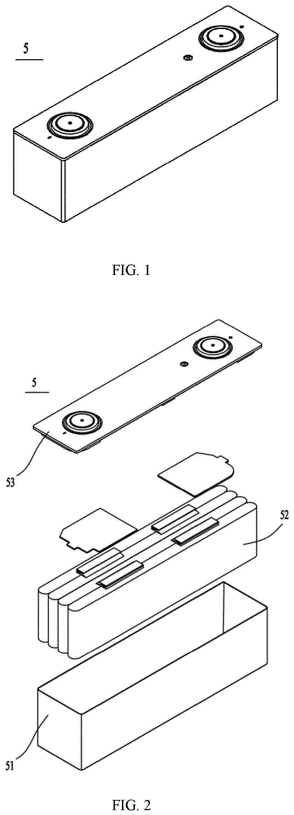

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG.1 and FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a negative electrode plate, and a separator may be made into an electrode assembly 52 by a winding process or a laminating process. The electrode assembly 52 is packaged in the accommodating cavity. The electrolytic solution is infiltrated in the electrode assembly 52. The number of electrode assemblies 52 contained in the secondary battery 5 may be one or more, and may be adjusted according to requirements.

A process for preparing the secondary battery of the present application is well known in the art. In some embodiments, a positive electrode plate, a negative electrode plate, a separator and an electrolytic solution may be assembled into a secondary battery. As an example, a positive electrode plate, a separator, and a negative electrode plate can be made into an electrode assembly by a winding process or a laminating process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary batteries according to the present application can be assembled into a battery module, and the number of secondary batteries contained in the battery module can be more than one, and the specific number can be adjusted according to application and capacity of the battery module.

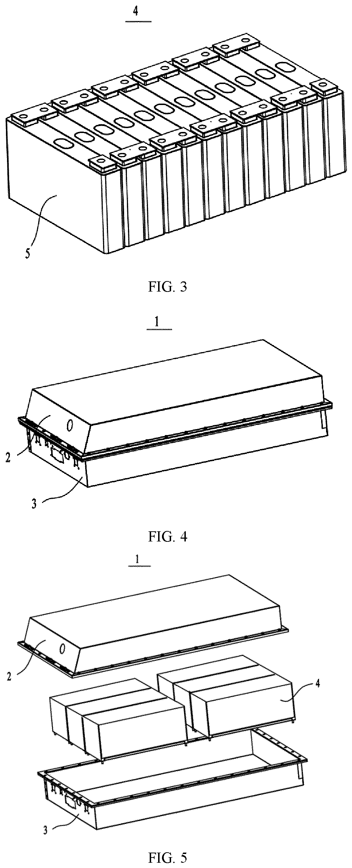

FIG. 3 is a schematic diagram of the battery module 4 as an example. As shown in FIG. 3, in the battery module 4, a plurality of secondary batteries 5 may be arranged in sequence along a longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

FIGS. 4 and 5 are schematic diagrams of the battery pack 1 as an example. As shown in FIGS. 4 and 5, the battery pack 1 may include a battery case and a plurality of battery modules 4 provided in the battery case. The battery case includes an upper case 2 and a lower case 3, and the upper case 2 is used to cover the lower case 3 to form a closed space for accommodating the battery modules 4. A plurality of battery modules 4 may be arranged in the battery case in any manner.

### Electrical device

A fourth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

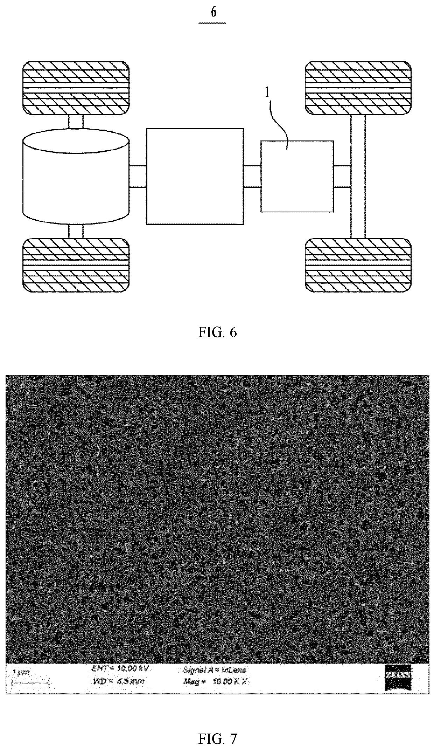

FIG. 6 is a schematic diagrams of an electrical device as an example. The electrical device 6 is a pure electric vehicle, a hybrid electric vehicle, or a plug-in hybrid electric vehicle. In order to meet high power and high energy density requirements of the electrical device, a battery pack 1 or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on mass, and all reagents used in the examples are commercially available or synthesized according to conventional methods and can be directly used without further treatment, and all instruments used in the examples are commercially available.

### Example 1

### 1. Preparation of Negative Electrode Plate

### 1.1 Preparation of silicon-carbon composite material

(1) 500 g of phenolic resin with a solid content of 80% and 500 g of anhydrous ethanol were weighted respectively, and then stirred homogenously, to which 250 g of zinc chloride was added, satisfying the conditions of a1/a2=1 and a1/a3=2. During the process, the stirring was carried out at a rotation speed of 1000 r/min for 3h, thereby obtaining a homogeneous resin solution.
(2) The solution was transferred to a heated mold and then placed in a blast oven at a temperature of 60°C for 10 h for preheating, so as to transform the liquid resin into a solid state;
(3) The resulting solid was heat treated under an atmosphere of air at 180°C for 10 h to remove the solvent and enhance a molecular cross-linking degree of the composite resin to form a carbon precursor with a three-dimensional network structure;
(4) The solid obtained above was crushed into fine powder such that it has the following particle parameters: Dv50=7.5 µm, and Dv90=15 µm;
(5) The powder was further subjected to a two-step carbonization treatment as follows: the powder was subjected to precarbonization by heating from room temperature to 500°C and keep it at that temperature for 1 h, and then it was further subjected to carbonization by heating to 1000°C for 2 h, and then it was subjected to removal of impurities and sieving to obtain a porous carbon matrix, wherein the porous carbon matrix had a pore structure presenting a three-dimensional network and at least some of pores in the surface region of the carbon-based matrix particles had a pore size larger than the pores in the internal region of the carbon-based matrix particles. In this step the carbonization treatment was carried out using a segmented carbonization, i.e., a first carbonization process and a second carbonization process, in which the temperature of the first carbonization process was less than the temperature of the second carbonization process.
(6) Nanosilicon was deposited in pores of the porous carbon matrix by chemical vapor deposition to obtain a silicon carbon composite. In this regard, the prepared silicon carbon composites had the following properties: DV₅₀=8.2 µm, DV₉₀=15.7 µm, (DV₉₀-DV₁₀)/ DV₅₀=1.56, SSA=3.1 m²/g, powder compaction density=1.1 g/cm³, and tap density=0.45 g/cm³.

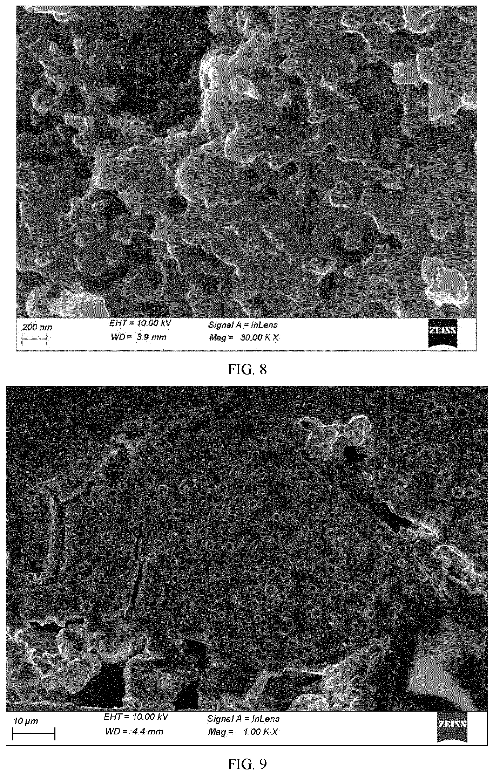

FIGS. 7 and 8 illustrated cross-sectional views of a porous carbon matrix having a pore structure that exhibits a three-dimensional crosslinked network, and it can also be seen in FIG. 8 that the pore structure presenting a three-dimensional crosslinked network is in a laminar distribution in the carbon-based matrix particles.

### 1.2 Preparation of negative electrode plate

The negative electrode active material (25% silicon-carbon composite prepared above + 75% artificial graphite), conductive carbon black, sodium carboxymethyl cellulose (CMC-Na) as a thickener, and styrene-butadiene rubber emulsion (SBR) as a binder were thoroughly stirred and mixed in an appropriate amount of deionized water at a weight ratio of 96.5: 1.0: 1.0: 1.5 so as to form a homogeneous negative electrode slurry; the negative electrode slurry was applied to a negative electrode collector, followed by drying and other processes, thereby obtaining a negative electrode plate.

1.3 Preparation of positive electrode plate: LiNi_{0.8}Co_{0.1}Mn_{0.1}O₂ (NCM811) as a positive active material, polyvinylidene fluoride (PVDF) as a binder, and acetylene black as a conductive agent were dissolved in N-methyl pyrrolidone (NMP) as a solvent at a weight ratio of 97%:1.5%:1.5%, and then were thoroughly stirred and mixed. The positive electrode slurry was uniformly applied to an aluminium foil as a positive electrode collector, followed by drying, cold pressing, and slitting, thereby obtaining a positive electrode plate.

1.4 Separator: Polypropylene film was used.

1.5 Preparation of electrolytic solution: ethylene carbonate (EC), ethyl methyl carbonate (EMC), and diethyl carbonate (DEC) were mixed in a ratio of 1:1:1 by volume, and then LiPF₆ was uniformly dissolved in the above solution to obtain an electrolyte solution. In this electrolytic solution, LiPF₆ has a concentration of 1 mol/L.

1.6 Preparation of the secondary battery: the above-mentioned positive electrode plate, separator, and negative electrode plate were stacked and wound in order to obtain an electrode assembly. The electrode assembly was placed into an outer package, to which the electrolytic solution prepared above was added, and then it was subjected to encapsulation, resting, chemical formation, aging, and other processes, thereby obtaining a secondary battery.

### Comparative Example 1

The secondary battery of Comparative Example 1 was prepared in a process that was basically the same as that of Example 1, with the difference that in Comparative Example 1, a different silicon carbon composite material was used and the silicon carbon composite material was prepared as follows:
(1) 50 g of phenolic resin and 50 g of anhydrous ethanol, were weighted respectively, and then stirred homogenously to obtain a uniform resin solution;
(2) 15 ml of TEOS (ethyl orthosilicate) solution was weighted and poured into the above resin solution with stirring homogenously until TEOS was polymerized into silica spheres;
(3) 3 ml of ammonia (25 wt%) was weighted and poured into the above solution and the resulting solution was placed in a constant temperature water bath with a temperature adjusted to 40°C, with stirring until ethanol was removed by evaporation. The resulting gel was cured under vacuum at 130°C for 10h to obtain a resin precursor for carbonization;
(4) the resulting solid powder was placed in a tube furnace and subjected to pyrolysis at 800 °C for 2h, and the powder was cleaned with 1M HF for decontamination and then dried, thereby obtaining a silicon-carbon composite material.

FIG. 9 illustrates cross-sectional views of the porous carbon-based matrix particles of Comparative Example 1. As can be seen, it had a honeycomb pore structure.

The parameters of Examples 1-5 and Comparative Example were shown in Table 1:

**Table 1**

| No. | Pore structure | Silicon-carbon mass ratio | Cycle life/times | Specific capacity of negative electrode active material /mAh/g |
|---|---|---|---|---|
| Example 1 | Three-dimensional network interconnecting pore structure | 40.1% | 1500 | 1950 |
| Comparative Example 1 | honeycomb pore structure | 7.3% | 400 | 550 |

### Examples 2-6.

In Examples 2-6, the secondary battery was prepared in a process that was basically the same as that of Example 1, with the difference that the process parameters for the preparation of the silicon-carbon composite were adjusted in Examples 2-6, as detailed in Table

**Table 2**

| No. | Crosslinking resin | | Solvent | | porogenic agent | | a1/a2 | a1/a3 | Preheating temperature (°C) | First carbonization temperature (°C) | Second carbonization temperature (°C) |
|---|---|---|---|---|---|---|---|---|---|---|---|
| | Type | Mass | Type | Mass | Type | Mass | | | | | |
| Example 1 | phenolic resin | 500g | anhydrous ethanol | 500g | ZnCl₂ | 250 g | 1 | 2 | 60 | 500 | 1000 |
| Example 2 | phenolic resin | 500g | anhydrous ethanol | 500g | ZnCl₂ | 250 g | 1 | 2 | 80 | 500 | 1000 |
| Example 3 | phenolic resin | 500g | anhydrous ethanol | 500g | ZnCl₂ | 375 g | 1 | 1.3 | 80 | 700 | 1000 |
| Example 4 | phenolic resin | 500g | anhydrous ethanol | 1000g | ZnCl₂ | 375 g | 0.5 | 1.3 | 100 | 800 | 1000 |
| Example 5 | phenolic resin | 500g | anhydrous ethanol | 1000g | ZnCl₂ | 500 g | 0.5 | 1 | 120 | 800 | 800 |
| Example 6 | phenolic resin | 500g | anhydrous ethanol | 1000g | ZnCl₂ | 800 g | 0.5 | 0.6 | 120 | 800 | 800 |

**Table 3**

| No. | Pore structure | P₁₁ (g/cm³) | P₂₁/P₁₁ | V₂/V₁ | Cycle life/times | Specific capacity of negative electrode active material /mAh/g |
|---|---|---|---|---|---|---|
| Example 1 | Three-dimensional network interconnecting pore structure | 1.11 | 1.02 | 10.5 | 1500 | 680 |
| Example 2 | Three-dimensional network interconnecting pore structure | 1.15 | 1.05 | 8.34 | 1450 | 675 |
| Example 3 | Three-dimensional network interconnecting pore structure | 1.19 | 1.08 | 7.02 | 1442 | 659 |
| Example 4 | Three-dimensional network interconnecting pore structure | 1.22 | 1.15 | 6.80 | 1415 | 650 |
| Example 5 | Three-dimensional network interconnecting pore structure | 1.28 | 1.2 | 3.02 | 1389 | 650 |
| Example 6 | Three-dimensional network interconnecting pore structure | 1.37 | 1.25 | 2.05 | 1200 | 630 |

### Test section

### 1. Cycle performance of batteries

### Test of cycle count:

The secondary battery obtained from each examples and comparative example was charged at a constant current at a rate of 0.5 C to a charge cutoff voltage of 4.25 V at 25°C, and then charged at a constant voltage to a current of ≤0.05 C, it was allowed to set standing for 5 min, and it was discharged at a constant current at a rate of 0.33 C to a discharge cutoff voltage of 2 V, and then it was allowed to set standing for 5 min, which is a charge and discharge cycle. According to this method, the battery was subjected to a cycle charge and discharge test, until capacity of the battery declined to 80%. The number of cycle at this time was cycle life of the battery at 25°C.

### 2. Specific capacity of negative electrode active material

The specific capacity of the negative electrode active material was tested as described below. The negative electrode plate prepared in the above Examples and Comparative Example was taken, and then punched and cut into a small disc sample of 1.8 cm²×1.8 cm², in which the weight of the small disc sample was weighted as M1, and the weight of the current collector in the small disc sample was weighted as M2. A lithium metal plate was taken as a counter electrode, and a polyethylene (PE) film was used as a separator, and an electrolytic solution was obtained by mixing ethylene carbonate (EC), ethyl methyl carbonate (EMC), diethyl carbonate (DEC) at a ratio of 1:1:1 by volume, and then dissolving LiPF₆ in the above solution uniformly to obtain the electrolytic solution, in which LiPF6 had a concentration of 1 mol/L. All the above parts were assembled into a button half-battery in an argon-protected glove box; the resulting button battery was left to stand for 12 hours, and then discharged at a constant current of 0.05C to 0.005 V, and it was allowed to set standing for 10 minutes, and then it was further discharged at a constant current of 50 µA to 0.005 V; and then it was charged at a constant current of 0.1C to 2 V, in which the charge capacity, C was recorded. Specific capacity of the negative electrode active material = C/(M1 - M2).

As can be seen from Table 1, the carbon-based matrix particles with a three-dimensional network interconnecting pore structure as prepared and obtained by Example 1, can provide more space for silicon, which can be used for the storage of a large amount of silicon, thus improving specific capacity of the silicon-carbon composite. In addition, such pore structure enables silicon to be dispersed uniformly in pores, and not to be agglomerated easily, and the pore structure can alleviate the volume effect of silicon in the process of intercalation and deintercalation of lithium, and can fully withstand stress changes generated by silicon, thereby ensuring structural stability of the silicon-carbon composite, and thus improving cycle stability of the silicon-carbon composite.

The pore structure of the carbon-based matrix particles of Comparative Example 1 is a honeycomb pore structure, which is not conducive to providing sufficient space for deposition of silicon, resulting in a relatively low amount of deposited silicon, and the material obtained by compounding silicon and carbon has a relatively small specific capacity. In addition, the material obtained by compounding silicon and carbon has a worse overall structural stability, resulting in a relatively low cycle life when it is applied to a secondary battery.

As can be seen from Tables 2-3 of Examples 1 to 6, by adjusting preparation process parameters of the silicon-carbon composite material, specific configuration of the three-dimensional network structure of the carbon-based matrix particles can be adjusted, so that its mechanical properties and silicon storage space may be adjusted; and compression-resistant properties of the silicon-carbon composite material can be improved, so that structural stability of the negative electrode film comprising the negative electrode active material may be further ensured and cycle performance of the secondary battery may be improved.

Although the present application has been described with reference to the preferred embodiments, various improvements may be made thereto and parts thereof may be replaced with equivalents without departing from the scope of the present application. In particular, as long as there is no structural conflict, each of the technical features mentioned in the various embodiments can be combined in any manner. The present application is not limited to the particular embodiments disclosed herein, but includes all technical solutions falling within the scope of the claims.

## Claims

1. A silicon-carbon composite, comprising
carbon-based matrix particles, the carbon-based matrix particles comprising a three-dimensional network interconnecting pore structure; and
silicon-based nanoparticles, at least a portion of which is disposed in the three-dimensional network interconnecting pore structure.

2. The silicon-carbon composite as claimed in claim 1, wherein at least a portion of pores in a surface region of the carbon-based matrix particles have a pore size larger than pores in an internal region of the carbon-based matrix particles.

3. The silicon-carbon composite as claimed in claim 1 or 2, wherein the three-dimensional network interconnecting pore structure exhibits a laminar distribution in the carbon-based matrix particles.

4. The silicon-carbon composite as claimed in any one of claims 1 to 3, wherein the silicon-carbon composite satisfies: 1.00 < P₂₁/P₁₁ ≤ 1.20; optionally, 1.02 ≤ P₂₁/P₁₁ ≤ 1.10, in which P₁₁ denotes a powder compaction density of the silicon-carbon composite in g/cm³ after undergoing press once under a force of 20,000N, and P₂₁ denotes a powder compaction density of the silicon-carbon composite in g/cm³ after undergoing press under a force of 20,000N for 20 times.

5. The silicon-carbon composite as claimed in any one of claims 1 to 4, wherein the silicon-carbon composite satisfies: 1.10≤P₁₁≤1.40; optionally, 1.12≤P₁₁≤1.35, in which P₁₁ denotes a powder compaction density of the silicon-carbon composite in g/cm³ under a force of 20,000N.

6. The silicon-carbon composite as claimed in any one of claims 1 to 5, wherein the carbon-based matrix particles have a total volume of pores with a diameter greater than 100 nm, denoted as V₁ in cm³/g, the carbon-based matrix particles have a total volume of pores with a diameter less than or equal to 100 nm, denoted as V₂ in cm³/g, and the carbon-based matrix particles satisfy: 1 < V₂/V₁ ≤ 30; optionally, 3 ≤ V₂/ V₁ ≤ 25, as measured using a gas adsorption-desorption method.

7. The silicon-carbon composite as claimed in any one of claims 1 to 6, wherein the carbon-based matrix particles have a total volume of pores with a diameter greater than 100 nm, noted as V₁ in cm³/g, as measured using a gas adsorption-desorption method and V₁ ≥ 0.01, and optionally, 0.01 ≤ V₁ ≤ 0.5; and/or
the carbon-based matrix particles have a total volume of pores with a diameter less than or equal to 100 nm, noted as V₂ in cm³/g, as measured using a gas adsorption-desorption method and V₂ ≥ 0.05, and optionally, 0.05 ≤ V₁ ≤ 1.1.

8. The silicon-carbon composite as claimed in any one of claims 1 to 7, wherein the carbon-based matrix particles satisfy at least one of the following conditions (1) to (4):
(1) the carbon-based matrix particles have a porosity, noted as W, of 40% ≤ W ≤ 80%; optionally, 50% ≤ W ≤ 70%;
(2) the carbon-based matrix particles have a powder compaction density under a force of 50,000 N, noted as P in g/cm³, of 0.4 ≤ P ≤ 1.1; optionally, 0.6 ≤ P ≤ 0.9;
(3) the carbon-based matrix particles have areal density, noted as ρ in g/cm3, of 1.7≤ρ≤2.5; optionally, 1.9≤ρ≤2.2; and
(4) the carbon-based matrix particles include one or more of graphite, soft carbon, and hard carbon.

9. The silicon-carbon composite as claimed in any one of claims 1 to 8, wherein the silicon-based nanoparticles comprise one or more of a silicon-oxygen compound, a pre-lithiated silicon-oxygen compound, amorphous silicon, crystalline silicon, and a silicon-carbon composite; optionally, the silicon-based nanoparticles comprise amorphous silicon.

10. The silicon-carbon composite as claimed in any one of claims 1 to 9, wherein the silicon-based nanoparticles have a mass percentage in the silicon-carbon composite of greater than or equal to 40%; optionally 40%-60%.

11. The silicon-carbon composite as claimed in any one of claims 1 to 10, wherein the silicon-carbon composite satisfies at least one of the following conditions (I) to (V):
the silicon-carbon composite has a volume particle size Dv10 satisfying Dv10 ≤ 5 µm; optionally, 3 µm ≤ Dv10 ≤ 5 µm;
the silicon-carbon composite has a volume particle size Dv50 satisfying Dv50 ≤ 10 µm; optionally, 5 µm ≤ Dv50 ≤ 8 µm;
the silicon-carbon composite has a volume particle size Dv90 satisfying Dv90 ≤ 20 µm; optionally, 8 µm ≤ Dv90 ≤ 18 µm;
the silicon-carbon composite has a particle size distribution satisfying (Dv90-Dv10)/Dv50≤1.6; optionally, 1.4≤(Dv90-Dv10)/Dv50≤1.6; and
the silicon-carbon composite has a specific surface area SSA satisfying: 2 m²/g≤SSA≤10 m²/g; optionally, 3 m²/g≤SSA≤7 m²/g.

12. A method of preparing the silicon-carbon composite as claimed in any one of claims 1 to 11, comprising the steps of:
mixing a crosslinking resin, a porogenic agent and a solvent to form a hybrid system;
preheating the hybrid system to volatilize the solvent and allow the crosslinking resin to cure to form a solid resin;
breaking the solid resin to form a granular resin;
carbonizing the granular resin to volatilize the porogenic agent and to etch the granular resin to form carbon-based matrix particles having a three-dimensional crosslinked network structure; and
generating silicon-based nanoparticles by chemical vapor deposition from a gas comprising a silicon precursor, with at least a portion of the silicon-based nanoparticles attached to pores of the carbon-based matrix particles.

13. The method as claimed in claim 12, wherein
the crosslinking resin is added in a mass content, noted as a1, based on the total mass of the hybrid system;
the solvent is added in a mass content, noted as a2, based on the total mass of the hybrid system; and
the hybrid system satisfies: 0.1 ≤ a1/a2 ≤ 10; optionally, 0.5 ≤ a1/a2 ≤ 2.

14. The method as claimed in claim 12 or 13, wherein
the crosslinking resin is added in a mass content, noted as a1, based on the total mass of the hybrid system;
the porogenic agent is added in a mass content, noted as a3, based on the total mass of the hybrid system; and
the hybrid system satisfies: 0.1 ≤ a1/a3 ≤ 5; optionally, 0.5 ≤ a1/a3 ≤ 3.

15. The method as claimed in any one of claims 12 to 14, wherein
the preheating step is carried out at a temperature of 60°C to 120°C, optionally 60°C to 80°C; and/or
the preheating step is carried out for a period of t1 ≥ 10 h, optionally 15h to 20h.

16. The method as claimed in any one of claims 12 to 15, wherein
the carbonizing step comprises a first carbonizing step and a second carbonizing step, in which the first carbonizing step is carried out at a temperature of 500°C to 800°C, and the first carbonizing step is carried out at a period of 2h to 3h; and/or,
the second carbonizing step is carried out at a temperature of 800°C to 1000°C, and the second carbonizing step is carried out at a period of 3h to 5h.

17. The method as claimed in any one of claims 12 to 16, wherein based on the mass of the carbon-based matrix particles, the silicon precursor is added in an amount of greater than or equal to 40%; optionally, from 40% to 60%.

18. The method as claimed in any one of claims 12 to 17, wherein the chemical vapor deposition is carried out at a deposition temperature of less than or equal to 600°C; optionally, of 450°C to 550°C.

19. A secondary battery comprising a negative electrode plate, the negative electrode plate comprising the silicon-carbon composite as claimed in any one of claims 1 to 11, or the silicon-carbon composite prepared by the method as claimed in any one of claims 12 to 18.

20. An electrical device comprising the secondary battery as claimed in claim 19.
